# EUROPÄISCHE PATENTSCHRIFT

(11) **EP 3 630 583 B1**
(45) Veröffentlichungstag und Bekanntmachung des Hinweises auf die Patenterteilung: **03.03.2021**
(21) Anmeldenummer: 18727752.0
(22) Anmeldetag: 22.05.2018
(51) Int. Cl.: B62D 15/02, B60K 35/00, B60W 50/14, B62D 1/04, B62D 1/06

(54) **FAHRSYSTEM ZUM AUTOMATISIERTEN FAHREN MIT EINER LENKRADANZEIGE ZUR ANZEIGE DER ENTFERNUNG ZU EINEM ENDPUNKT FÜR AUTOMATISIERTES FAHREN UND VERFAHREN ZUR ANZEIGE DER ENTFERNUNG**
TRAVEL SYSTEM FOR AUTOMATIC DRIVING WITH MEANS TO MARK STEERING WHEEL SECTORS AND A CORRESPONDING METHOD
SYSTÈME POUR UNE CONDUITE AUTOMATIQUE AVEC DES MOYENS DE MARQUAGES DE SECTEURS SUR LE VOLANT ET UN PROCÉDÉ CORRESPONDANT

(30) Priorität: 23.05.2017 DE 102017208763
(43) Veröffentlichungstag der Anmeldung: 08.04.2020
(73) Patentinhaber: Bayerische Motoren Werke Aktiengesellschaft, 80809 München (DE)
(72) Erfinder: BREISINGER, Marc, 80799 München (US); BROY, Nora, 81539 München (DE); EICHHORN, Julian, 80639 München (DE); HERGETH, Sebastian, 80804 München (DE); KERSCHBAUM, Philipp, 80339 München (DE); KÜNZNER, Hermann, 85356 Freising (DE); LORENZ, Lutz, 81539 München (DE); MÜLLER, Stephan, 80335 München (DE); NIEMANN, Julia, 12161 Berlin (DE); PLATTEN, Frederik, 80333 München (DE); SPIESSL, Wolfgang, 80807 München (DE); SÜSSENGUTH, Philipp, 81247 München (DE)
(86) Internationale Anmeldenummer: PCT/EP2018/063346
(87) Internationale Veröffentlichungsnummer: WO 2018/215439

(56) Entgegenhaltungen:
- EP-A1- 3 124 352
- WO-A1-2016/014692
- DE-A1-102014 118 958
- US-B1- 8 260 482

## Beschreibung

Die Erfindung betrifft ein Fahrsystem zum automatisierten Fahren für ein Kraftfahrzeug, insbesondere Personenkraftwagen, und ein Anzeigeverfahren für ein Fahrsystem zum automatisierten Fahren.

Unter dem Begriff "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren im Sinne der Anmeldung handelt es sich typischerweise um ein zeitlich längeres Fahren, beispielsweise auf der Autobahn. Der Begriff "automatisiertes Fahren" umfasst ein automatisiertes Fahren mit einem beliebigen Automatisierungsgrad, bei dem Fahrer vor einem bevorstehende Ende des automatisierten Fahrens in der Lage sein muss, die Fahraufgabe teilweise oder vollständig zu übernehmen. Beispielhafte Automatisierungsgrade sind ein assistiertes, teilautomatisiertes, hochautomatisiertes oder vollautomatisiertes Fahren, insbesondere das hochautomatisierte und das vollautomatisierte Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren (TAF) übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren (HAF) übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren (VAF) kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Beispielsweise entspricht das hochautomatisierte Fahren (HAF) Level 3 der Norm SAE J3016.

Fahrzeuge, die automatisiert fahren, können dies im Allgemeinen nicht unter allen Straßen- und Umweltbedingungen.

Beispielsweise kann es für ein Fahrsystem zum hochautomatisierten Fahren auf der Autobahn vorgesehen sein, dass das Fahrzeug nur auf für das hochautomatisierte Fahren freigegebenen Streckenabschnitten der Autobahn hochautomatisiert Fahren kann. Bevor das Ende eines aktuell befahrenen Streckenabschnitts, der für das hochautomatisierte Fahren freigegeben ist, erreicht wird, muss der Fahrer die Fahrzeugführung im Allgemeinen vollständig, aber zumindest teilweise, übernehmen.

Darüber hinaus muss der Fahrer bei solchen Fahrsystemen zum hochautomatisierten Fahren typischerweise vor dem Abfahren von der Autobahn auf einen anderen Straßentyp die Fahrzeugführung übernehmen.

Daher ist es sinnvoll, das Ende einer Automatisierungsstrecke anzuzeigen, um den Fahrer darauf vorzubereiten, wieder die Fahrzeugführung zu übernehmen.

Es sollte sichergestellt werden, dass der Fahrer vor Ende der Automatisierungsstrecke die Fahrzeugführung übernimmt. Dabei sollte der Übergang vom automatisierten Fahren zum vollständig manuellen oder zumindest teilweise manuellen Fahren möglichst komfortabel und souverän erfolgen. Um dies zu gewährleisten, können beispielsweise die verbleibenden Kilometer oder die geschätzte Restzeit bis zum Ende der Automatisierungsstrecke in einer Anzeige graphisch oder mittels Textinformation nach Art eines Countdowns dargestellt werden. Hierzu wird beispielsweise auf die Druckschrift DE 10 2013 110 852 A1 und die Druckschrift DE 10 2013 019 141 A1 verwiesen.

Es ist möglich, dass eine derartige optische Anzeige, beispielsweise in einem Kombi-Instrument, übersehen wird, insbesondere dann wenn der Fahrer die Durchführung der automatisierten Fahrzeugführung wie beim hochautomatisierten Fahren nicht dauerhaft überwacht und beispielsweise durch eine andere Handlung, wie beispielsweise das Betrachten eines Films, ablenkt ist. Es ist möglich, dass aus dem gleichen Grund akustische Warnungen überhört werden. Es ist denkbar, dass haptische Warnungen, wie ein Vibrieren oder eine Bewegung des Sitzes, nicht oder falsch zugeordnet werden.

Aus der Druckschrift DE 10 2011 112 134 A1 ist ein Lenkrad bekannt, dessen Lenkradkranz Lichtquellen aufweist. Bei Aktivieren des autonomen Fahrbetriebs des Fahrzeugs werden die Lichtquellen des Lenkradkranzes aktiviert.

Ferner beschreibt die Druckschrift DE 10 2013 012 779 A1 die Verwendung einer bogenförmigen Leuchteinheit im Lenkradkranz zur optischen Signalisierung der Aktivierung eines automatischen Fahrmodus und zur optischen Signalisierung einer Übernahmeaufforderung. Nach der Aktivierung des autonomen Fahrmodus leuchtet der Lenkradkranz beispielsweise grün. Bei Übergang in den manuellen Fahrbetrieb leuchtet der Lenkradkranz zunächst weiterhin grün und blinkt dabei. Wenn danach keine Übernahme erfolgt, leuchtet der Lenkradkranz rot. Nach der Fahrerübernahme leuchtet der Lenkradkranz blau.

Aus der Druckschrift DE 10 2007 052 258 A1 ist es bekannt, den Zustand der Querführung über einen Leuchtring am Lenkrad zu signalisieren. Bei deaktivierter Querführung leuchtet der Leuchtring rot. Im Bereitschaftszustand leuchtet der Leuchtring beispielsweise in gelber Farbe. Beim Übergang vom deaktivierten Zustand der Querführung in den aktivierten Zustand wechselt der Leuchtring auf die Farbe Grün. Bei einer Übernahmeaufforderung blinkt der Leuchtring in roter Farbe. EP 3 124 352 offenbart ein gattungsgemäßes Fahrsystem zum automatisierten Fahren für ein Kraftfahrzeug.

Es ist Aufgabe der Erfindung, den Fahrer über die verbleibende Distanz bis zum Ende des automatisierten Fahrens auf eine derartige Weise zu informieren, die für den Fahrer leicht wahrnehmbar und intuitiv verständlich ist.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Ein erster Aspekt der Erfindung betrifft ein Fahrsystem zum automatisierten Fahren für ein Kraftfahrzeug. Bei dem automatisierten Fahren handelt es sich um ein automatisiertes Fahren mit automatisierter Quer- und/oder Längsführung, insbesondere um ein hochautomatisiertes Fahren mit automatisierter Quer- und Längsführung.

Das Fahrsystem umfasst eine Benutzerschnittstelle mit einer Lenkradanzeige mit einer Leuchtband-Struktur. Die Leuchtband-Struktur ist vorzugsweise im Lenkradkranz integriert. Es wäre aber auch denkbar, dass die Leuchtband-Struktur im Pralltopf des Lenkrads integriert ist. Dadurch dass die Anzeige am Lenkrad umgesetzt ist, kann diese auch aus dem Augenwinkel gut wahrgenommen werden.

Bei der Leuchtband-Struktur handelt es sich vorzugsweise um eine bogenartige Struktur, insbesondere um einen Ring. Der Ring ist mit Vorteil vollständig geschlossen; es wäre aber auch denkbar, dass die Leuchtband-Struktur einem im oberen Bereich und/oder im unteren Bereich geöffnetem Ring entspricht.

Die Leuchtband-Struktur der Lenkradanzeige ist in einer definierten Leuchtfarbe (z. B. blau) mit je nach Ansteuerung veränderbarer Länge leuchtfähig. Hierzu umfasst die Leuchtband-Struktur vorzugsweise mehrere nebeneinander angeordnete Leuchtelemente, deren Leuchtverhalten vorzugsweise einzeln steuerbar ist.

Das Fahrsystem ist eingerichtet, die Lenkradanzeige derart zu steuern, dass während des automatisierten Fahrens, beispielsweise während ein hochautomatisierter Fahrbetrieb vorliegt, die Leuchtband-Struktur auf einer Ausgangslänge in der (definierten) Leuchtfarbe leuchtet, z. B. blau. Hierbei leuchten beispielsweise sämtliche einzelnen Leuchtelemente der Leuchtband-Struktur, so dass die Ausgangslänge dann der maximalen Leuchtlänge entspricht. Beispielsweise kann ein Automatisierungszustand "hochautomatisiertes Fahren aktiv" durch einen komplett blau beleuchteten Lenkradkranz dargestellt werden.

Wenn die Leuchtband-Struktur einem Ring entspricht, leuchtet die Lenkradanzeige vorzugsweise als Ring in der definierten Farbe, indem beispielsweise alle Leuchtelemente der Leuchtband-Struktur in dieser Farbe leuchten.

Das Fahrsystem stellt bei Annäherung an ein vorausliegendes Ende des automatisierten Fahrens (vorzugsweise des hochautomatisierten Fahrens) irgendwann fest, dass sich das Fahrzeug einem vorausliegenden Endpunkt für das automatisierte Fahren derart genähert hat, dass eine bestimmte Näherungsbedingung erfüllt ist.

Beispielsweise entspricht die Näherungsbedingung der Bedingung, dass der längenbezogene oder zeitliche Abstand von der aktuellen Fahrzeugposition zu einem Endpunkt für das automatisierte Fahren kleiner oder kleiner gleich als ein bestimmter Schwellwert ist, beispielsweise ein Schwellwert im Bereich von 20 s bis 10 min (z. B. 1 min) im Fall eines zeitlichen Abstands oder beispielsweise ein Schwellwert im Bereich von 1000 m bis 30 km (z. B. 3 km) im Fall eines längenbezogenen Abstands.

Die Näherungsbedingung kann auf einen Endpunkt der Strecke bezogen sein, hinter dem die Fahrstrecke nicht mehr für das automatisierte Fahren freigegeben ist. Die Näherungsbedingung kann alternativ beispielsweise auch auf einen davor liegenden Punkt bezogen sein, bis zu dem die Fahraufgabe tatsächlich an den Fahrer übergangen sein muss.

Information über das Ende kann beispielswiese in einer elektronischen Karte im Fahrzeug gespeichert sein oder über das Mobilfunk-Netz empfangen werden.

Sofern im Fahrzeug eine Zielführung des Navigationssystems aktiv ist und das Fahrzeug auf einer vom Navigationssystem berechneten Route fährt, kann das Fahrzeug den Fahrer nicht nur über einen Endpunkt für das automatisierte Fahren, der bei Weiterfahrt auf der aktuell befahrenen Straße (z. B. Autobahn) liegt, informieren, sondern auch über Endpunkte für das automatisierte Fahren, die sich bei einem Wechsel der aktuell befahrenen Straße auf der Route ergeben.

Wenn das System festgestellt hat, dass sich das Fahrzeug derart dem Ende des automatisierten Fahrens genähert hat, dass die Bedingung erfüllt ist, wird die Lenkradanzeige derart gesteuert, dass bei sukzessiv abnehmender Entfernung zu dem Endpunkt für das automatisierte Fahren die Leuchtband-Struktur ausgehend von der Ausgangslänge mit sukzessiv abnehmender Länge in der Leuchtfarbe leuchtet, um den Fahrer darauf vorzubereiten, wieder die Fahrzeugführung vollständig oder zumindest teilweise zu übernehmen. Wenn sich das Fahrzeug dem Ende der Automatisierungsstrecke nähert, wird die Länge des in der Leuchtfarbe (z. B. blau) beleuchteten Bereichs der Leuchtband-Struktur immer weiter reduziert, bis die Leuchtfarbe mit Erreichen eines kritischen Übernahmezeitpunkts beispielsweise verschwunden ist. Dann kann die Anzeige durch weitere Maßnahmen wie Farbumschläge, Blinken etc. noch in eine Phase intensiver Warnung eintreten. Die Reduzierung der Lenkradbeleuchtung erfolgt beispielsweise in ähnlicher Weise wie ein Countdown, der die geschätzte Restzeit oder die Restentfernung bis zum Übergabezeitpunkt darstellt. Ein derartiger Countdown kann parallel auch auf einem Bildschirm angezeigt werden.

Die Tatsache, dass die Anzeige an dem Element (nämlich Lenkrad) erfolgt, an dem der Fahrer im Allgemeinen die Übernahme der Fahraufgabe vollzieht (indem der Fahrer das Lenkrad greift), ermöglicht ein für den Fahrer sehr intuitives Anzeigekonzept.

Das erfindungsgemäße Anzeigekonzept erlaubt eine sehr deutliche, intuitiv interpretierbare Darstellung des verbleibenden Spielraums, bis eine Fahrerübernahme der Fahraufgabe spätestens erforderlich ist. Dadurch ergibt sich ein Gewinn an Komfort, Souveränität und Sicherheit.

Vorzugsweise handelt es sich bei der Leuchtband-Struktur um eine im Wesentlichen symmetrische Struktur, die eine linke und eine rechte Hälfte aufweist, insbesondere eine linke und rechte Hälfte eines Rings.

Das Fahrsystem ist in diesem Fall vorzugsweise eingerichtet, die Lenkradanzeige derart zu steuern, dass bei sukzessiv abnehmender Entfernung zu dem Endpunkt für das automatisierte Fahren die linke und die rechte Hälfte der Leuchtband-Struktur jeweils ausgehend von der halben Ausgangslänge (beispielsweise der Länge des halben Rings links bzw rechts im Fall eines Rings) mit sukzessiv abnehmender Länge in der Leuchtfarbe (z. b. blau) leuchtet. Die Abnahme erfolgt dabei in der Weise, dass die Beleuchtung in der Leuchtfarbe (z. b. blau) ausgehend vom oberen und/oder unteren Bereich der Leuchtband-Struktur (z. B. ausgehend vom oberen und unteren Bereich eines Leuchtrings) abnimmt.

Sofern die Leuchtband-Struktur im Lenkradkranz integriert ist, kann die Länge, auf der die linke bzw. rechte Hälfte der Leuchtband-Struktur in der Leuchtfarbe (z. B. blau) leuchtet, in Abhängigkeit des Abstands zum Endpunkt des automatisierten Fahrens auf eine definierte minimale Länge reduziert werden. Die in der Leuchtfarbe leuchtenden Bereiche minimaler Länge in der linken und der rechten Hälfte markieren dann jeweils einen Berührbereich zum Berühren des Lenkrads. Es werden also die Bereiche am Lenkradkranz markiert, wo der Hände des Fahrers positioniert werden sollen, um seine Übernahmefähigkeit sicherzustellen. Wenn der Fahrer die Fahrerübergabe dann nicht übernimmt, kann ferner die Farbe dieser Leuchtbereiche auf eine Farbe mit stärkerem Warncharakter (z. b. orange oder rot) geändert werden, um die Warnung zu verstärken. Alternativ oder zusätzliche kann beispielsweise von einem Dauerleuchten auf ein Blinkleuchten gewechselt werden.

Es kann mit einer entsprechenden Hands-On-Detektionsvorrichtung festgestellt werden, ob der Fahrer tatsächlich seine Hände ans Lenkrad nimmt (bevorzugt sogar festgestellt werden, ob der Fahrer die Hände an den markierten Bereichen positioniert), um bei Bestätigung die Übernahmeaufforderung durch das Lichtsignal in der Lenkradanzeige einzustellen und hierdurch die erfolgte Übernahme der Fahraufgabe zu signalisieren. Hierzu kann beispielsweise im Lenkrad integrierte Hands-On-Sensorik verwendet werden, beispielsweise eine kapazitive Hands-On-Sensorik.

In Reaktion auf das Anlegen der Hände an das Lenkrad wird vorzugsweise die Länge, auf der die Leuchtband-Struktur in der Leuchtfarbe leuchtet, auf null reduziert und die Automatisierung beendet (oder zumindest teilweise beendet), um dem Fahrer die (vollständige bzw. teilweise) Übergabe der Fahreraufgabe an den Fahrer zu signalisieren. In Reaktion auf das Anlegen der Hände wird vorzugsweise die verbleibende Länge in der Leuchtfarbe (z. B. das restliche Blau) (im Vergleich zu der Abnahme der Länge vorher) schneller reduziert. Die Abnahme der Länge auf null kann optional neben der Bedingung des Anlegens der Hände an das Lenkrad noch von einer oder mehreren Zusatzbedingungen abhängen, beispielsweise das Blicken des Fahrers auf das vorausliegende Verkehrsgeschehen (dies kann mit einer kamerabasierten Fahrerüberwachung festgestellt werden).

Vorzugsweise nimmt die Länge, auf der die Leuchtstruktur leuchtet, bei Annäherung an den Endpunkt für das automatisierte Fahren schrittweise ab. Hierzu wird für jeden Punkt aus einer Mehrzahl von aufeinander folgenden definierten Punkten auf der Strecke vor dem Endpunkt, das Erreichen eines jeweiligen Punkts auf der Strecke vor dem Endpunkt festgestellt. Nach dem Erreichen eines jeweiligen Punkts wird jeweils die Länge reduziert, auf der die Leuchtband-Struktur in der Leuchtfarbe leuchtet. Synchron mit dem Erreichen der einzelnen Punkte kann die Länge, auf der die Leuchtband-Struktur in der Leuchtfarbe leuchtet, verringert werden.

Bei den Punkten kann es sich um zeitbasierte Punkte oder längenbezogene Punkte, die beispielsweise in Bezug auf einen Endpunkt für das automatisierte Fahren definiert sind.

Sofern beispielsweise n Punkte vorgesehen sind, wird die Länge, auf der die Leuchtband-Struktur in der Leuchtfarbe leuchtet, vorzugsweise in n Schritten reduziert.

Beispielsweise sind zumindest drei zeitlichen Punkte Δt₁ vor dem Endpunkt (z. B. Δt₁ = 60 s), Δt₂ vor dem Endpunkt (z. B. Δt₂ = 40 s) und Δt₃ vor dem Endpunkt (z. B. Δt₃ = 20 s) definiert. Die Länge eines geschlossenen Leuchtrings wird beispielsweise das erste Mal nach Erreichen des Punktes Δt₁, das zweite Mal nach Erreichen des Punktes Δt₂ und das dritte Mal nach Erreichen des Punktes nach Erreichen des Punktes Δt₃ reduziert.

Sofern die Punkte in einem vordefinierten zeitlichen Abstand zueinander und zum Endpunkt stehen, erfolgt die Verringerung der Länge auch bei unterschiedlicher Geschwindigkeit immer gleich schnell. Dies hat den Vorteil der besseren Nachvollziehbarkeit der Längenabnahme für den Fahrer.

In diesem Fall wird vorzugsweise eine Geschwindigkeitsschätzung für die vorausliegende Fahrstrecke durchgeführt. Bei der Geschwindigkeitsschätzung kann beispielsweise eine Durchschnittgeschwindigkeit oder ein Geschwindigkeitsverlauf bestimmt werden. Die Geschwindigkeitsschätzung kann laufend aktualisiert werden.

Basierend auf der Entfernung zum Endpunkt für das automatisierte Fahren und der Geschwindigkeitsschätzung kann die voraussichtliche Zeitdauer bis zum Erreichen des Endpunkts für das automatisierte Fahren geschätzt werden. Diese voraussichtliche Zeitdauer kann mit den vordefinierten Zeitpunkten verglichen werden, um festzustellen, ob ein vordefinierter Zeitpunkt erreicht wurde.

Alternativ können auch die Zeitpunkte basierend auf der Geschwindigkeitsschätzung in Ortspunkte auf der Strecke umgerechnet werden. Es kann dann mittels des Navigationssystems geprüft werden, ob ein derartiger Ortspunkt erreicht wurde.

Ein zweiter Aspekt der Erfindung betrifft ein Verfahren zum Informieren des Fahrers eines Kraftfahrzeugs über ein bevorstehendes Ende des automatisierten Fahrens. Das Kraftfahrzeug umfasst ein Fahrsystem zum automatisierten Fahren, insbesondere zum hochautomatisierten Fahren. Ferner ist eine Lenkradanzeige mit einer bereits vorstehend beschriebenen Leuchtband-Struktur vorhanden. Das Verfahren umfasst die folgenden Schritte:
- Steuern der Lenkradanzeige derart, dass während des automatisierten Fahrens die Leuchtband-Struktur auf einer Ausgangslänge in der Leuchtfarbe leuchtet, z. B. als geschlossener Ring mit maximaler Länge;
- Festzustellen, dass sich das Fahrzeug einem vorausliegenden Endpunkt für das automatisierte Fahren derart genähert hat, dass eine bestimmte Näherungsbedingung erfüllt ist; und
- in Reaktion hierauf, Steuern der Lenkradanzeige derart, dass bei sukzessiv abnehmender Entfernung zu dem Endpunkt für das automatisierte Fahren die Leuchtband-Struktur ausgehend von der Ausgangslänge mit sukzessiv abnehmender Länge in der Leuchtfarbe leuchtet, um den Fahrer darauf vorzubereiten, wieder die Fahrzeugführung vollständig oder zumindest teilweise zu übernehmen.

Die vorstehenden Ausführungen zum erfindungsgemäßen Fahrsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Fahrsystems.

Die Erfindung wird nachfolgend anhand eines Ausführungsbeispiels unter Zuhilfenahme der beigefügten Zeichnungen beschrieben. In diesen zeigen:
- Fig. 1: ein Ausführungsbeispiel eines Lenkrad mit Lenkradanzeige;
- Fig. 2: ein beispielhaftes Ablaufdiagramm zur Steuerung der Lenkradanzeige; und
- Fig. 3: eine beispielhafte Abfolge von Anzeigezuständen der Lenkradanzeige über dem zeitlichen Abstand Δt zum Endpunkt der Automatisierungsstrecke.

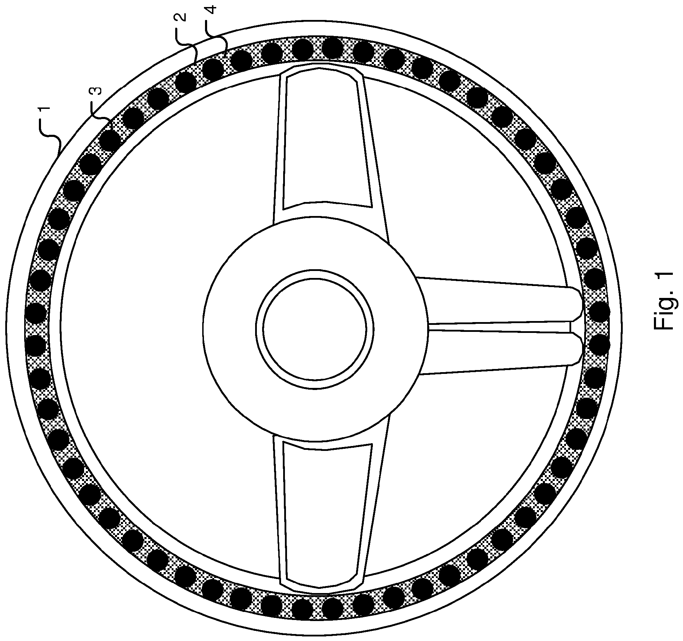

In Fig.1 ist ein Ausführungsbeispiel eines Lenkrads 1 mit Lenkradanzeige dargestellt. Die Lenkradanzeige weist eine Leuchtband-Struktur 2 in Form eines Rings auf, die im Lenkradkranz integriert ist. Die Leuchtband-Struktur 2 umfasst eine Kette nebeneinander angeordneter gleichartiger Leuchtelemente 3. Bei den Leuchtelementen 3 handelt es sich beispielsweise um Leuchtdioden (LED - light emitting diode). Jedes Leuchtelement 3 kann eine oder mehrere Leuchtdioden umfassen, beispielsweise zwei oder drei Dioden, insbesondere im Fall eines in verschiedenen Leuchtfarben leuchtfähigen Leuchtelements 3.

Die Leuchtelemente 3 sind vorzugsweise hinter einer im Lenkradkranz eingelassenen lichtdurchlässigen Schicht 4 angeordnet, durch die Licht abgestrahlt wird.

Die Leuchtelemente 3 können vorzugsweise einzeln angesteuert werden. Es ist von Vorteil, wenn die Leuchtelemente 3 in verschiedenen Farben leuchten können, beispielsweise in blau, gelb und rot.

Je nach Abstand, Anzahl der Leuchtelemente 3 und Streuung des Lichts kann der Leuchtcharakter von einer im Wesentlichen homogenen Beleuchtung im Bereich der leuchtenden Leuchtelemente 3 bis hin zu einer eher lose Kette von Leuchtpunkten reichen.

Die Lenkrandzeige ist Teil einer Benutzerschnittstelle eines beispielhaften Fahrsystems zum automatisierten Fahren. Das Fahrsystem weist einen Fahrmodus zum hochautomatisierten Fahren mit automatisierter Längs- und Querführung auf, beispielsweise zum Fahren auf der Autobahn. Ferner sind weitere Fahrmodi mit geringerem Automatisierungsgrad denkbar, beispielsweise ein Fahrmodus zum teilautomatisierten Fahren mit automatisierter Längs- und Querführung sowie ein Fahrmodus zum assistierten Fahren mit automatisierter Längsführung und/oder ein anderer Fahrmodus zum assistierten Fahren mit automatisierter Querführung. Das nachfolgend anhand des Fahrmodus zum hochautomatisierten Fahren beschriebene Beispiel kann auch auf andere Automatisierungsgrade übertragen werden.

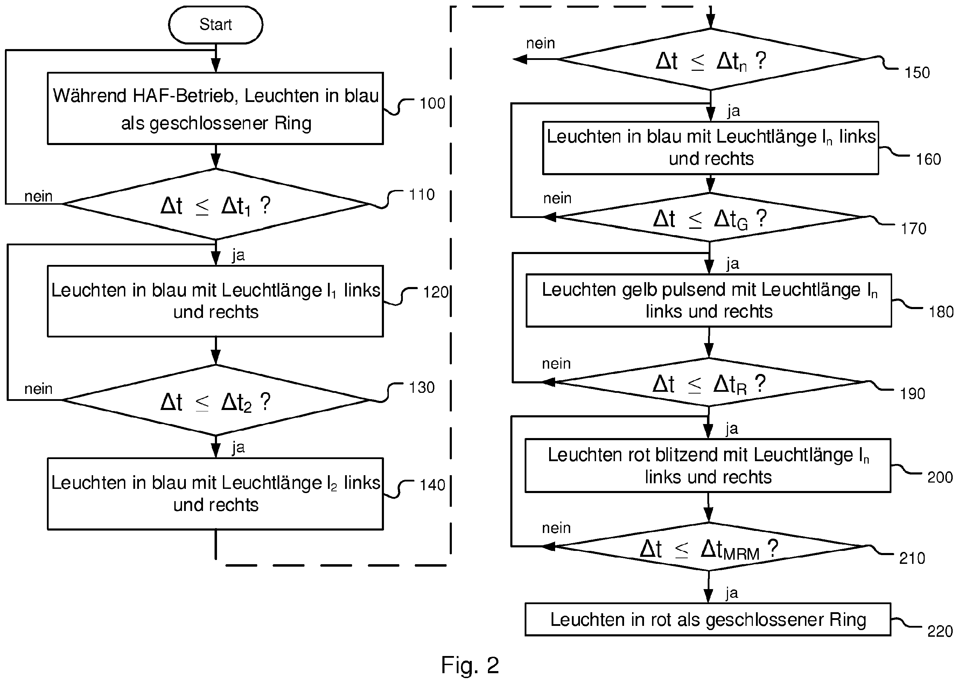

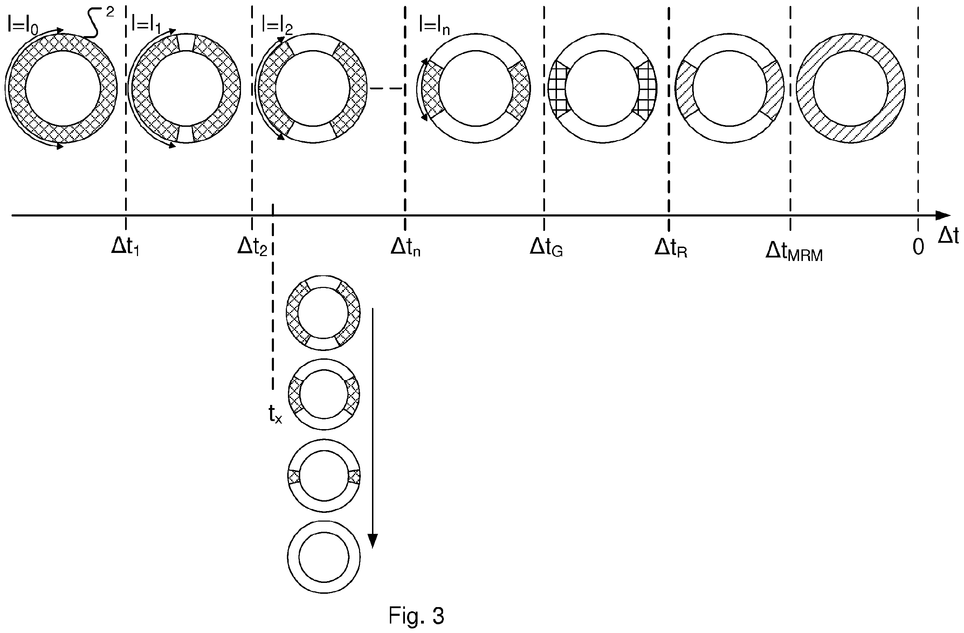

Nachfolgend wird in Verbindung mit Fig. 2 und Fig. 3 ein beispielhafter Ablauf der Lenkradanzeige bei abnehmender Restentfernung zu einem Endpunkt für das hochautomatisierte Fahren dargestellt.

Der Ablauf geht von einem Zustand aus, in dem der Fahrmodus zum hochautomatisierten Fahren aktiv ist und die Längs- und Querführung des Fahrzeugs vom Fahrsystem durchgeführt wird. In diesem Zustand leuchtet aufgrund entsprechender Ansteuerung der Lenkradanzeige die Leuchtband-Struktur als geschlossener Ring in einer dem hochautomatisierten Fahren zugewiesenen ersten Farbe (s. Schritt 100); sämtliche Leuchtelemente 3 leuchten dafür in der ersten Leuchtfarbe, z. B. blau. Die Länge des rechten und linken Leuchtbereichs des Rings beträgt jeweils l₀. Es handelt es sich vorzugsweise um ein Dauerleuchten.

Basierend auf der Streckendistanz Δs zu einem bekannten Endpunkt für das hochautomatisierte Fahren und einer Prognose über die Geschwindigkeit bis zum Endpunkt wird laufend die aktuelle Zeitdistanz Δt zum Endpunkt für das hochautomatisierte Fahren geschätzt.

Zur Steuerung der Lenkradanzeige sind feste Zeitdistanzen Δt₁, Δt₂, ..., Δtₙ₋₁, Δtₙ, Δt_{G}, Δt_{R}, Δt_{MRM} zum Endpunkt für das hochautomatisierte Fahren mit n > 2 vordefiniert, wobei folgende Beziehung gilt:
Δt₁ > Δt₂ > Δt₂₊₁ ... > Δtₙ₋₁ > Δtₙ > Δt_{G} > Δt_{R}> Δt_{MRM}

Die Größe n gibt die Anzahl der Schritte an, mit der die Länge der in der ersten Leuchtfarbe leuchtenden Bereiche verringert wird, beispielsweise 5 Schritte.

Pro Reduktionsschritt werden eine definierte Anzahl der obersten und untersten Leuchtelemente 3, die vor der jeweiligen Längenreduktion noch in der ersten Leuchtfarbe leuchten, ausgeschaltet. Alternativ wäre es auch möglich, dass diese Leuchtelemente 3 auf eine andere Leuchtfarbe umschalten. Die Längenreduktion erfolgt für die linke und rechte Seite der Leuchtanzeige in gleicher Weise. Die Abnahme von oben und unten kann im Wesentlichen symmetrisch erfolgen; dies ist jedoch nicht zwingend.

Nachdem die aktuelle Zeitdistanz Δt kleiner gleich der vorgegebenen Zeitdistanz Δt₁ geworden ist (s. Abfrage 110 in Fig. 2), wird die Leuchtlänge l, mit der der linke bzw. rechte Teil der Lenkradanzeige in blau leuchtet, auf die Länge l = l₁ reduziert (s. Fig. 3 und Schritt 120 in Fig. 2), indem eine definierte Menge der obersten und untersten in der ersten Leuchtfarbe leuchtenden Leuchtelemente 3 ausgeschaltet werden. Mit Reduktion der Länge könnte vom Dauerleuchten auch in ein blinkendes Leuchten umgeschaltet werden.

Nachdem die aktuelle Zeitdistanz Δt kleiner gleich der vorgegebenen Zeitdistanz Δt₂ geworden ist (s. Abfrage 130 in Fig. 3), wird die Leuchtlänge l, mit der der linke bzw. rechte Teil der Lenkradanzeige in der ersten Leuchtfarbe leuchtet, auf die Länge l = l₂ reduziert (s. Fig. 3 und Schritt 140), indem eine weitere definierte Menge der obersten und untersten in der ersten Leuchtfarbe leuchtenden Leuchtelemente 3 ausgeschaltet werden.

Sofern der Fahrer die Fahraufgabe nicht übernimmt, wird die Länge mit Erreichen der einzelnen Zeitdistanzen tᵢ sukzessive reduziert, bis die Länge l, mit der der linke bzw. rechte Teil des Lenkradanzeige in der ersten Leuchtfarbe leuchtet, auf die minimale Länge l = lₙ > 0 reduziert wird (s. Schritt 160), nachdem die Zeitdistanz Δtₙ zum Endpunkt für das automatisierte Fahren erreicht wurde (s. die Abfrage 150). Alternativ wäre es auch denkbar, dass die Länge mit Erreichen der einzelnen Zeitdistanzen ti sukzessive auf null reduziert wird.

Der in der Leuchtfarbe leuchtende Bereich minimaler Länge lₙ der linken und der rechten Hälfte markiert den Berührbereich zum Berühren des Lenkrads.

Sofern der Fahrer die Fahraufgabe nicht übernimmt, wird nach Erreichen der Zeitdistanz Δt_{G} (s. Abfrage 170) die Leuchtfarbe von der ersten Leuchtfarbe auf eine zweite Leuchtfarbe umgeschaltet (s. Schritt 180), die im Vergleich zur ersten Leuchtfarbe einen höheren Warncharakter hat (z. B. auf die Farbe Gelb). Hierbei wird die Länge lₙ beibehalten. Sofern in der alternativen Ausgestaltung vorher bereits die Länge l auf null reduziert wurde, wird die Länge entsprechend erhöht. Vorzugsweise handelt es sich um ein pulsendes Leuchten.

Sofern der Fahrer die Fahraufgabe nicht übernimmt, wird nach Erreichen der Zeitdistanz Δt_{R} (s. Abfrage 190) die Leuchtfarbe von der zweiten Leuchtfarbe auf eine dritte Leuchtfarbe umgeschaltet (s. Schritt 200), die im Vergleich zur zweiten Leuchtfarbe einen höheren Warncharakter hat (z. B. auf die Farbe Rot). Hierbei wird die Länge lₙ beibehalten. Vorzugsweise handelt es sich um ein blitzendes Leuchten.

Sofern der Fahrer die Fahraufgabe nicht übernimmt, wird nach Erreichen der Zeitdistanz Δt_{MRM} (s. Abfrage 2100) die Lenkradanzeige so angesteuert, dass der Leuchtring als geschlossener Ring in der zweiten Leuchtfarbe leuchtet (s. Schritt 220). Hierbei handelt es sich vorzugsweise um ein Dauerleuchten. Vorzugsweise ist vorgesehen, dass das Fahrzeug dann ein Nothaltemanöver durchführt.

Vorstehend wurde davon ausgegangen, dass anfänglich die Zeitdistanz Δt größer als Δt₁ ist. Sofern jedoch erst nach Erreichen der Zeitdistanz Δt₁ festgestellt wird, dass ein Ende der Automatisierung voraus liegt, wird der der Zeitdistanz Δt zugehörige Leuchtzustand angenommen und danach bei weiterer Abnahme der Zeitdistanz der Leuchtzustand entsprechend der vorstehenden Beschreibung verändert. Sofern dabei die verbleibende Zeitdauer für den Leuchtzustand ein bestimmtes Maß unterschreitet, kann direkt auf den in der Abfolge nachfolgenden Leuchtzustand gewartet werden oder entsprechend früher direkt in diesen Leuchtzustand gewechselt werden.

Sofern ausgehend von der Ausgangslänge lo ein Leuchtzustand mit Leuchten in der ersten Farbe und reduzierter Leuchtlänge lᵢ angenommen werden soll, kann die Leuchtlänge ausgehend von der Ausgangslänge lo schrittweise in schneller Abfolge auf die Ziellänge lᵢ reduziert werden.

Zumindest nach Erreichen der Zeitdistanz Δt₁ kann der Fahrer die Fahraufgabe übernehmen, indem der Fahrer die Hände an das Lenkrad 1 nimmt. Über eine Hands-On-Sensorik im Lenkrad wird erkannt, wenn der Fahrer die Hände an das Lenkrad 1 nimmt. In Reaktion hierauf werden die in der ersten Leuchtfarbe leuchtenden restlichen Bereiche der Lenkradanzeige in schneller Abfolge auf null reduziert und die Fahraufgabe wird an den Fahrer übergeben. Diese Reaktion kann davon abhängig sein, ob eine oder mehrere optionale weitere Bedingungen erfüllt sind, beispielsweise ob der Fahrer auf die vorausliegende Verkehrssituation schaut. Die schnelle Abnahme auf null signalisiert dem Fahrer die Übergabe der Fahraufgabe an den Fahrer.

In Fig. 3 ist im unteren Bereich des Diagramms ein beispielhaftes Verhalten der Lenkradanzeige dargestellt, wenn der Fahrer zum Zeitpunkt tₓ die Hände an das Lenkrad nimmt, um die Fahraufgabe zu übernehmen.

## Patentansprüche

1. Fahrsystem zum automatisierten Fahren für ein Kraftfahrzeug, wobei das Fahrsystem umfasst
- eine Lenkradanzeige mit einer Leuchtband-Struktur (2), wobei die Leuchtband-Struktur (2) in einer Leuchtfarbe mit je nach Ansteuerung veränderbarer Länge leuchtfähig ist,
wobei das Fahrsystem eingerichtet ist,
- die Lenkradanzeige derart zu steuern, dass während des automatisierten Fahrens die Leuchtband-Struktur (2) auf einer Ausgangslänge in der Leuchtfarbe leuchtet,
- festzustellen, dass sich das Fahrzeug einem vorausliegenden Endpunkt für das automatisierte Fahren derart genähert hat, dass eine bestimmte Näherungsbedingung erfüllt ist, und
- in Reaktion hierauf die Lenkradanzeige derart zu steuern, dass bei sukzessiv abnehmender Entfernung zu dem Endpunkt für das automatisierte Fahren die Leuchtband-Struktur (2) ausgehend von der Ausgangslänge mit sukzessiv abnehmender Länge in der Leuchtfarbe leuchtet, um den Fahrer darauf vorzubereiten, wieder die Fahrzeugführung vollständig oder zumindest teilweise zu übernehmen.

2. Fahrsystem zum automatisierten Fahren nach Anspruch 1, wobei die Leuchtband-Struktur (2) im Lenkradkranz integriert ist.

3. Fahrsystem zum automatisierten Fahren nach einem der vorhergehenden Ansprüche, wobei
- die Leuchtband-Struktur (2) einem Ring entspricht und
- das Fahrsystem eingerichtet ist, die Lenkradanzeige derart zu steuern, dass während des automatisierten Fahrens die Leuchtband-Struktur (2) als Ring leuchtet.

4. Fahrsystem zum automatisierten Fahren nach einem der vorhergehenden Ansprüche, wobei
- die Leuchtband-Struktur einen linken und einen rechten Teil aufweist, insbesondere einen linken und rechten Teil eines Rings,
- das Fahrsystem eingerichtet ist, die Lenkradanzeige derart zu steuern, dass bei sukzessiv abnehmender Entfernung zu dem Endpunkt für das automatisierte Fahren der linke und der rechte Teil der Leuchtband-Struktur jeweils mit sukzessiv abnehmender Länge (l) in der Leuchtfarbe leuchtet, wobei die Beleuchtung in der Leuchtfarbe ausgehend vom oberen und/oder unteren Bereich der Leuchtband-Struktur (2) abnimmt.

5. Fahrsystem nach Anspruch 4, wobei
- die Leuchtband-Struktur (2) im Lenkradkranz integriert ist, und
- das Fahrsystem eingerichtet ist, die jeweiligen Länge (l), auf der der linke bzw. rechte Teil der Leuchtband-Struktur in der Leuchtfarbe leuchtet, auf eine definierte minimale Länge (lₙ) zu reduzieren, wobei der in der Leuchtfarbe leuchtende Bereich minimaler Länge des linken und des rechten Teils jeweils den Berührbereich zum Berühren des Lenkrads markiert.

6. Fahrsystem zum automatisierten Fahren nach einem der vorhergehenden Ansprüche, wobei das Fahrsystem eingerichtet ist,
- für jeden Punkt aus einer Mehrzahl von aufeinander folgenden definierten Punkten (Δtᵢ) auf der Strecke vor dem Endpunkt, das Erreichen eines jeweiligen Punkts (Δtᵢ) auf der Strecke vor dem Endpunkt festzustellen, und
- nach dem Erreichen eines jeweiligen Punkts (Δtᵢ) jeweils die Länge zu reduzieren, auf der die Leuchtband-Struktur (2) in der Leuchtfarbe leuchtet.

7. Fahrsystem nach Anspruch 6, wobei die Punkte (Δtᵢ) in einem vordefinierten zeitlichen Abstand zueinander und zum Endpunkt stehen.

8. Fahrsystem nach einem der vorhergehenden Ansprüche, wobei das Fahrsystem eingerichtet ist,
- festzustellen, dass der Fahrer die Hände wieder an das Lenkrad (1) nimmt,
- in Reaktion hierauf die Länge, auf der die Leuchtband-Struktur (2) in der Leuchtfarbe leuchtet, auf null zu reduzieren, um dem Fahrer die Übergabe der Fahreraufgabe an den Fahrer zu signalisieren.

9. Fahrsystem nach einem der vorhergehenden Ansprüche, wobei das Fahrsystem eingerichtet ist,
- festzustellen, dass der Fahrer die Hände wieder an das Lenkrad (1) nimmt,
- in Reaktion hierauf die Länge, auf der die Leuchtband-Struktur (2) in der Leuchtfarbe leuchtet, im Vergleich zu der entfernungsabhängigen Reduktion der Länge schneller zu reduzieren, um dem Fahrer die Übergabe der Fahreraufgabe an den Fahrer zu signalisieren.

10. Verfahren zum Informieren des Fahrers eines Kraftfahrzeugs über ein bevorstehendes Ende des automatisierten Fahrens, wobei das Kraftfahrzeug ein Fahrsystem zum automatisierten Fahren umfasst, welches umfasst:
- eine Lenkradanzeige mit einer Leuchtband-Struktur (2), wobei die Leuchtband-Struktur (2) in einer Leuchtfarbe mit je nach Ansteuerung veränderbarer Länge leuchtfähig ist,
wobei das Verfahren die Schritte umfasst:
- Steuern der Lenkradanzeige derart, dass während des automatisierten Fahrens die Leuchtband-Struktur (2) auf einer Ausgangslänge in der Leuchtfarbe leuchtet;
- Festzustellen, dass sich das Fahrzeug einem vorausliegenden Endpunkt für das automatisierte Fahren derart genähert hat, dass eine bestimmte Näherungsbedingung erfüllt ist; und
- in Reaktion hierauf, Steuern der Lenkradanzeige derart, dass bei sukzessiv abnehmender Entfernung zu dem Endpunkt für das automatisierte Fahren die Leuchtband-Struktur (2) ausgehend von der Ausgangslänge mit sukzessiv abnehmender Länge in der Leuchtfarbe leuchtet, um den Fahrer darauf vorzubereiten, wieder die Fahrzeugführung vollständig oder zumindest teilweise zu übernehmen.

## Claims

1. Driving system for automated driving for a motor vehicle, wherein the driving system comprises
- a steering wheel display having a light-emitting strip structure (2), wherein the light-emitting strip structure (2) is capable of emitting light in an emitted light color with a length that is variable depending on actuation,
wherein the driving system is set up for
- controlling the steering wheel display such that, during automated driving, the light-emitting strip structure (2) emits light of the emitted light color along a starting length,
- ascertaining that the vehicle has approached an upcoming endpoint for automated driving such that a specific approach condition has been met, and
- as a reaction thereto, controlling the steering wheel display such that, in the case of a successively decreasing distance from the endpoint for automated driving, the light-emitting strip structure (2) emits light in the emitted light color with successively decreasing length, beginning with the starting length, to prepare the driver for once again fully or at least partially assuming control of the vehicle.

2. Driving system for automated driving according to Claim 1, wherein the light-emitting strip structure (2) is integrated in the steering wheel rim.

3. Driving system for automated driving according to either of the preceding claims, wherein
- the light-emitting strip structure (2) corresponds to a ring, and
- the driving system is set up for controlling the steering wheel display such that the light-emitting strip structure (2) emits light as a ring during automated driving.

4. Driving system for automated driving according to one of the preceding claims, wherein
- the light-emitting strip structure has a left and a right part, in particular a left and a right part of a ring,
- the driving system is set up for controlling the steering wheel display such that, in the case of a successively decreasing distance to the endpoint for automated driving, the left and the right part of the light-emitting strip structure each emit the emitted light color with successively decreasing length (1), wherein the illumination in the emitted light color decreases starting from the upper and/or lower region of the light-emitting strip structure (2).

5. Driving system according to Claim 4, wherein
- the light-emitting strip structure (2) is integrated in the steering wheel rim, and
- the driving system is set up to reduce the respective length (1) along which the left and right parts of the light-emitting strip structure emit light in the emitted light color to a defined minimum length (lₙ), wherein the regions of minimum length of the left and right parts that emit light in the emitted light color in each case mark the contact region for touching the steering wheel.

6. Driving system for automated driving according to one of the preceding claims, wherein the driving system is set up
- to ascertain, for each point from a plurality of successive defined points (Δtᵢ) on the section before the endpoint, the reaching of a respective point (Δtᵢ) along the section before the endpoint, and
- after a respective point (Δtᵢ) has been reached, to reduce in each case the length along which the light-emitting strip structure (2) emits light in the emitted light color.

7. Driving system according to Claim 6, wherein the points (Δtᵢ) are situated at a predefined temporal distance with respect to one another and to the endpoint.

8. Driving system according to one of the preceding claims, wherein the driving system is set up
- to ascertain that the driver puts his or her hands back on the steering wheel (1),
- as a reaction thereto, to reduce the length along which the light-emitting strip structure (2) emits light in the emitted light color to zero so as to signal to the driver the transfer of the driving task to the driver.

9. Driving system according to one of the preceding claims, wherein the driving system is set up
- to ascertain that the driver puts his or her hands back on the steering wheel (1),
- as a reaction thereto, to reduce the length along which the light-emitting strip structure (2) emits light in the emitted light color faster as compared to the distance-dependent reduction in length so as to signal to the driver the transfer of the driving task to the driver.

10. Method for notifying the driver of a motor vehicle about an upcoming end of automated driving, wherein the motor vehicle comprises a driving system for automated driving which comprises:
- a steering wheel display having a light-emitting strip structure (2), wherein the light-emitting strip structure (2) is capable of emitting light in an emitted light color with a length that is variable depending on actuation,
wherein the method comprises the steps of:
- controlling the steering wheel display such that, during automated driving, the light-emitting strip structure (2) emits light of the emitted light color along a starting length;
- ascertaining that the vehicle has approached an upcoming endpoint for automated driving such that a specific approach condition has been met; and
- as a reaction thereto, controlling the steering wheel display such that, in the case of a successively decreasing distance from the endpoint for automated driving, the light-emitting strip structure (2) emits light in the emitted light color with successively decreasing length, beginning with the starting length, to prepare the driver for once again fully or at least partially assuming control of the vehicle.

## Revendications

1. Système de conduite destiné à la conduite automatisée d'un véhicule automobile, le système de conduite comprenant
- un affichage au volant pourvu d'une structure de bandes lumineuses (2), la structure de bandes lumineuses (2) pouvant s'éclairer dans une couleur d'éclairage à une longueur variable en fonction de la commande,
le système de conduite étant conçu pour
- commander l'affichage au volant de manière à ce que la structure de bandes lumineuses (2) s'éclaire dans la couleur d'éclairage à une longueur initiale pendant la conduite automatisée,
- déterminer si le véhicule s'est approché d'un point final à venir pour la conduite automatisée de manière à ce qu'une condition de proximité déterminée soit remplie, et
- commander en réponse l'affichage au volant de manière à ce que, pour une distance progressivement décroissante par rapport au point final de la conduite automatisée, la structure de bandes lumineuses (2) s'éclaire dans la couleur d'éclairage à une longueur progressivement décroissante à partir de la longueur initiale afin de préparer le conducteur à prendre complètement ou au moins partiellement en charge la conduite du véhicule.

2. Système de conduite destiné à la conduite automatisée selon la revendication 1, la structure de bandes lumineuses (2) étant intégrée dans le cerceau du volant.

3. Système de conduite destiné à la conduite automatisée selon l'une des revendications précédentes,
- la structure de bandes lumineuses (2) correspondant à un anneau et
- le système de conduite étant conçu pour commander l'affichage au volant de manière à ce que la structure de bandes lumineuses (2) s'éclaire en anneau pendant la conduite automatisée.

4. Système de conduite destiné à la conduite automatisée selon l'une des revendications précédentes,
- la structure de bandes lumineuses comporte une partie gauche et une partie droite, en particulier une partie gauche et une partie droite d'un anneau,
- le système de conduite étant conçu pour commander l'affichage au volant de telle manière que, pour la distance progressivement décroissante par rapport au point final de la conduite automatisée, les parties gauche et droite de la structure de bandes lumineuses s'éclairent chacune dans la couleur d'éclairage avec une longueur progressivement décroissante (1), l'éclairage dans la couleur d'éclairage diminuant à partir de la zone supérieure et/ou inférieure de la structure de bandes lumineuses (2).

5. Système de conduite selon la revendication 4,
- la structure de bandes lumineuses (2) étant intégrée dans le cerceau du volant, et
- le système de conduite étant conçu pour réduire la longueur respective (1), à laquelle la partie gauche ou la partie droite de la structure de bandes lumineuses s'éclaire dans la couleur d'éclairage, à une longueur minimale définie (lₙ), la zone éclairée dans la couleur lumineuse de longueur minimale des parties gauche et droite marquent chacune la zone tactile pour toucher le volant.

6. Système de conduite destiné à la conduite automatisée selon l'une des revendications précédentes, le système de conduite étant conçu pour
- déterminer pour chaque point à partir d'une pluralité de points successifs définis (Δtᵢ) sur l'itinéraire avant le point final, si un point respectif (Δtᵢ) sur l'itinéraire avant le point final est atteint, et
- réduire, après qu'un point respectif (Δtᵢ) a été atteint, la longueur sur laquelle la structure de bandes lumineuses (2) s'éclaire dans la couleur d'éclairage.

7. Système de conduite selon la revendication 6, les points (Δtᵢ) étant disposés à un intervalle de temps prédéfini les uns des autres et par rapport au point final.

8. Système de conduite selon l'une des revendications précédentes, le système de conduite étant conçu pour
- déterminer si le conducteur remet ses mains sur le volant (1),
- réduire à zéro en réponse à cela la longueur sur laquelle la structure de bandes lumineuses (2) s'éclaire dans la couleur d'éclairage pour signaler au conducteur le transfert de la tâche au conducteur.

9. Système de conduite selon l'une des revendications précédentes, le système de conduite étant conçu pour
- déterminer si le conducteur remet ses mains sur le volant (1),
- réduire en réponse la longueur sur laquelle la structure de bandes lumineuses (2) s'éclaire dans la couleur d'éclairage, par rapport à la réduction de longueur en fonction de la distance afin de signaler au conducteur le transfert de la tâche au conducteur.

10. Procédé d'information du conducteur d'un véhicule automobile sur la fin imminente de la conduite automatisée, le véhicule automobile comprenant un système de conduite, destiné à la conduite automatisée, qui comprend :
- un affichage au volant pourvu d'une structure de bandes lumineuses (2), la structure de bandes lumineuses (2) pouvant s'éclairer dans une couleur d'éclairage d'une longueur variable en fonction de la commande,
le procédé comprenant les étapes suivantes :
- commander l'affichage au volant de manière à ce que la structure de bandes lumineuses (2) s'éclaire dans la couleur d'éclairage à une longueur initiale pendant la conduite automatisée,
- déterminer si le véhicule s'est approché d'un point final à venir pour la conduite automatisée de manière à ce qu'une condition de proximité déterminée soit remplie, et
- commander en réponse l'affichage au volant de manière à ce que, pour une distance progressivement décroissante par rapport au point final de la conduite automatisée, la structure de bandes lumineuses (2) s'éclaire dans la couleur d'éclairage à une longueur progressivement décroissante à partir de la longueur initiale afin de préparer le conducteur à prendre complètement ou au moins partiellement en charge la conduite du véhicule.
